# EUROPÄISCHE PATENTSCHRIFT

(11) **EP 2 460 031 B1**
(45) Veröffentlichungstag und Bekanntmachung des Hinweises auf die Patenterteilung: **14.03.2018**
(21) Anmeldenummer: 10742412.9
(22) Anmeldetag: 29.06.2010
(51) Int. Cl.: G01S 13/94, G01S 17/93, G01C 23/00

(54) **VERFAHREN ZUR ERZEUGUNG EINER SENSORGESTÜTZTEN, SYNTHETISCHEN SICHT ZUR LANDEUNTERSTÜTZUNG VON HELIKOPTERN UNTER BROWN-OUT ODER WHITE-OUT-BEDINGUNGEN**
METHOD FOR PRODUCING A SENSOR-SUPPORTED, SYNTHETIC VISION FOR LANDING SUPPORT OF HELICOPTERS UNDER BROWN-OUT OR WHITE-OUT CONDITIONS
PROCÉDÉ DE PRODUCTION D'UNE VISIONIQUE TOUT TEMPS ASSISTÉE PAR DES CAPTEURS POUR L'ASSISTANCE À L'ATTERRISSAGE D'HÉLICOPTÈRES DANS DES CONDITIONS DE TEMPÊTE DE POUSSIÈRE/SABLE OU DE TEMPÊTE DE NEIGE

(30) Priorität: 29.07.2009 DE 102009035191
(43) Veröffentlichungstag der Anmeldung: 06.06.2012
(73) Patentinhaber: HENSOLDT Sensors GmbH, 82024 Taufkirchen (DE)
(72) Erfinder: MÜNSTERER, Thomas, 88069 Tettnang (DE); WEGNER, Matthias, 88048 Friedrichshafen (DE); KIELHORN, Peter, 88048 Friedrichshafen (DE)
(74) Vertreter: LifeTech IP Spies & Behrndt Patentanwälte PartG mbB
(86) Internationale Anmeldenummer: PCT/DE2010/000754
(87) Internationale Veröffentlichungsnummer: WO 2011/012102

(56) Entgegenhaltungen:
- EP-A1- 1 650 534
- EP-A2- 1 906 151
- WO-A2-2009/081177
- DE-A1- 10 015 164
- DE-A1-102007 014 878
- US-A1- 2009 002 220

## Beschreibung

Die Erfindung betrifft ein Verfahren zur Erzeugung einer sensorgestützten, synthetischen Sicht zur Landeunterstützung von Helikoptern unter Brown-Out oder White-Out-Bedingungen.

Bei Starts und Landungen von Hubschraubern in trockenen wüstenartigen oder schneebedeckten Gebieten kommt es in der Endphase der Landung zu einer plötzlichen starken Sichtbehinderung durch den aufgewirbelten Staub oder Schnee. Dieser Effekt wird Brown-Out, bzw. White-Out genannt. Die Sichtweiten können dabei innerhalb von Sekundenbruchteilen von VFR (Visual Flight Rules) Bedingungen auf unter einen Meter Sichtweite sinken. Der Pilot verliert die Orientierung über seine Fluglage, seine Flughöhe zum Boden und auch über Eigenbewegungen gegenüber dem Boden (Drift). Ein weiteres Problem ist, dass die Wahrnehmung der Umgebung (Situational Awareness) völlig verloren geht, sowohl was statische Hindernisse betrifft, als auch im Bezug auf Hindernisse, die sich in der Staubwolke auf den Hubschrauber zu bewegen. Hieraus resultierende Unfälle sind die größte Einzelursache für Hubschrauberverluste im militärischen Bereich in diesen Gebieten.

DE10 2004 051 625 B4 beschreibt einen allgemeinen Ansatz zur generellen Lösung des Brown-Out-Problems. Dieses Konzept beinhaltet die Verwendung eines hochauflösenden 3D-Sensors zur Erzeugung einer 3D-Repräsentation der Landezone während des Landeanflugs. Nach Eintritt in die Brown-Out-Situation werden keine neuen Daten mehr aufgenommen. Vielmehr werden die bestehenden Daten als synthetische Sicht der Landezone mit der Hubschrauberbewegung dargestellt. Der Ansatz entspricht dem sog. "See-and-Remember Konzept", welches allerdings von den operativen Piloten oftmals deswegen kritisiert wird, weil Veränderungen in der Landezone nach Eintritt in die Staubwolke nicht mehr detektiert werden. So kam es, nach Aussagen von Piloten im Einsatz, bereits mehrfach zu Beinaheunfällen durch Fahrzeuge und Personengruppen, die in Richtung des noch in der Luft befindlichen Hubschraubers gefahren, bzw. gelaufen sind und durch die Staubwolke der Sicht des Piloten entzogen waren.

WO 2005/015333A3 beschreibt ein ähnliches Konzept wie DE 10 2004 051 625 B4. Jedoch wird hier das Konzept wesentlich stärker in Richtung einer technischen Realisierung mit einer Vielzahl von Sensor-Suiten im Gesamtzusammenhang des Systems Hubschrauber beschrieben. Inhalt der hier aufgezeigten Lösung ist hauptsächlich ein technisches Gesamtkonzept für ein Brown-Out Recovery System, wobei speziell die Anbindung dieses Systems an einenHubschrauber-internen Datenbus und die Verbindung mit missionsspezifischen Informationen hervorgehoben wird.

EP 1 906 151 A1 beschreibt ebenfalls ein Verfahren zur Pilotenunterstützung durch "See and-Remember". Hier werden Bildsequenzen einer oder mehrerer 2D-Kameras als Datenbasis zur "See-and-Remember" Darstellung verwendet. Dies hat, neben den oben aufgeführten Nachteilen bei Veränderungen nach Eintritt ins Brown-Out, den zusätzlichen Nachteil, dass dreidimensionale Hindernisse unter ansonsten optimalen Bedingungen verzerrt, d.h. als Textur, dargestellt werden. Diese Veröffentlichung beschreibt darüber hinaus, das als zusätzlicher Sensor ein Millimeterwellen-Radar eingesetzt werden kann, das den Vorteil hat, durch Staubwolken hindurchsehen zu können.

Die DE 10 2007 014 878 A1 beschreibt ein Verfahren zur Kollisionswarnung bei Hubschraubern, das mehrere verschiedenartige Sensoren einsetzt. Für jeden Sensortyp erfolgt eine Mustererkennung, so dass auf definierte Objekte geschlossen werden kann. In einem weiteren Verfahrensschritt wird geprüft, ob es sich um dasselbe oder unterschiedliche Objekte handelt.

In der US2009/0002220 A1 ist ein Sichtsystem für einen Helikopter beschrieben, welches ebenfalls unterschiedliche Sensortypen einsetzt. Die parallel von den Sensoren aufgenommen Daten werden miteinander korreliert und fusioniert und Objekte identifiziert.

Die DE 100 15 164 A1 beschreibt ein weiteres Sichtsystem für einen Helikopter, welches unterschiedliche Sensortypen einsetzt und eine Fusion der Sensordaten vornimmt.

Aufgabe der Erfindung ist es, dem Piloten in der letzten Phase des Landeanflugs innerhalb der Brown-Out-Wolke plötzliche in die Landezone eintretende Gefährdungen mit hoher Warnzuverlässigkeit anzuzeigen.

Diese Aufgabe wird mit dem Verfahren gemäß Patentanspruch 1 gelöst. Vorteilhafte Ausgestaltungen der Erfindung sind Gegenstand von Unteransprüchen.

Die Erfindung geht aus von einem Verfahren zur Pilotenunterstützung bei Landungen von Helikoptern im Sichtflug unter Brown-Out oder White-Out-Bedingungen wie es aus DE 10 2004 051 625 B1 bekannt ist. Gemäß der vorliegenden Erfindung wird, sobald die Kontrollroutine die Aufnahme von 3D-Daten unter Brown-Out oder White-Out-Bedingungen feststellt, ein zusätzlicher Radarsensor, z.B. ein elektronisch scannendes Radar, aktiviert. Dieser Radarsensor liefert fortlaufend Daten zur fortlaufenden Erzeugung von Entfernungs- und/oder Dopplerdaten von potentiellen in die Landezone eindringenden Objekten. Diese Objekte werden dem Piloten des landenden Helikopters als Symbole in der synthetischen Sicht angezeigt.

Die Erfindung sowie vorteilhafte Ausgestaltungen werden im Folgenden anhand von Zeichnung erläutert. Es zeigen:
- Fig. 1: die Phasen einer typischen Landung unter Brown-Out-Bedingungen,
- Fig. 2: eine Darstellung einer gemäß dem erfindungsgemäßen Verfahrens überwachten Landezone.

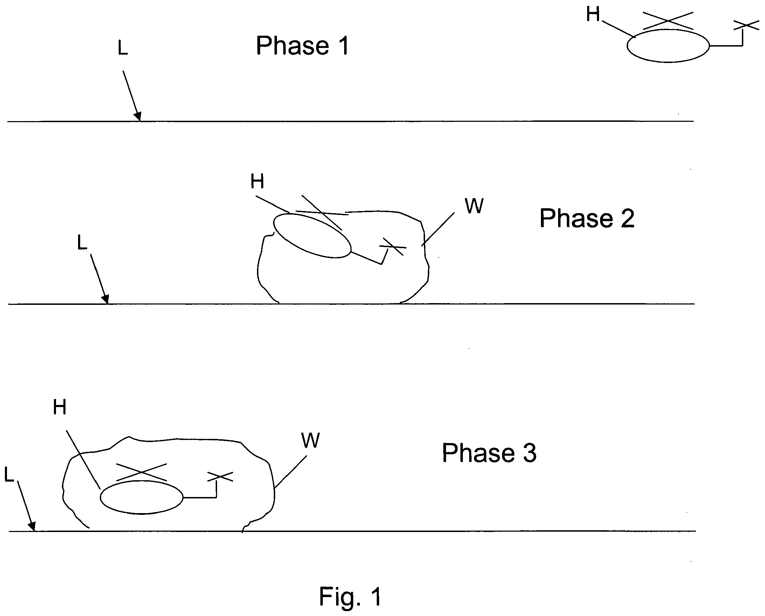

Der Landeanflug von Hubschraubern H unter Brown-Out oder White-Out Bedingungen lässt sich grob in 3 Phasen einteilen. Phase 1 ist die Annäherung an den Landeplatz L; in der Regel mit einer definierten Sinkrate auf einem definierten Gleitpfad, vergleichbar mit dem Sinkflug eines Flächenflugzeugs. Phase 2 besteht aus einem relativ abrupten Manöver zur Verringerung der Vorwärtsgeschwindigkeit in Flughöhen zwischen 20 und 100 ft. über Grund. Die Verringerung der Vorwärtsgeschwindigkeit erfolgt normalerweise durch ein sog. "Nose-up-Manöver", in dem der Nickwinkel des Hubschraubers H kurzzeitig stark erhöht wird. Diverse Publikationen stellen diesen Zeitpunkt als denjenigen dar, in dem der Hubschrauber H von der Brown-Out-Wolke W überholt wird, die er in Phase 1 noch hinter sich hergeschleppt hat. Jetzt befindet sich der Hubschrauber H im Zustand des Brown-Outs mit stark eingeschränkter, zum Teil sogar vollständig verlorengegangener Außensicht sowie dem vollständigen Verlust der Bodenreferenz. Phase 3 ist der eigentliche Landevorgang mit keiner oder sehr geringer Vorwärtsgeschwindigkeit bis zum vollständigen Aufsetzen des Hubschraubers H. Die beschriebenen Phasen einer Brown-Out-Landung werden in Fig. 1 skizziert.

Ein Verfahren zur Erzeugung einer hochaufgelösten, sensorgestützten, synthetischen Sicht zur Landeunterstützung, wie im Patent DE10 2004 051 625 B4 beschrieben, erzeugt in der Phase 1 und der beginnenden Phase 2 eine große Menge an 3D-Daten der Landezone L, die nach Eintritt in die Brown-Out-Wolke und in Phase 3 lagekorrigiert, zeitlich und geometrisch korrekt dargestellt werden (See-and-Remember Konzept).

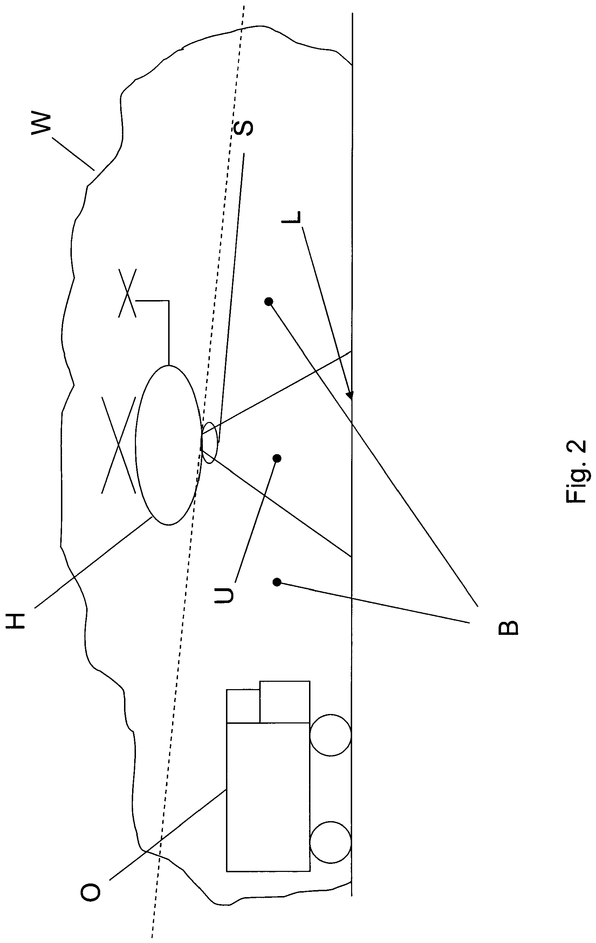

Die Erfindung erzielt eine Abdeckung der bestehenden Gefährdungen in den Phasen 2 und 3 durch einen zusätzlichen Sensor S (siehe Fig. 2). Dieser Sensor kann z.B. ein rundum scannendes Radar sein und ist zweckmäßig staubdurchdringend. Durch diesen zusätzlichen Sensor S wird auch in den Phasen 2 und 3 vor vorher nicht im Landebereich L existenten Gefahren O gewarnt. Die Warnung kann dabei relativ grob erfolgen, ähnlich der Warnung wie sie eine Einparkhilfe für Autos gibt.

Der zusätzliche Sensor S wird aktiviert, sobald die Kontrollroutine für den 3D-Sensor feststellt, dass die Aufnahme der 3D-Daten unter Brown-Out oder White-Out-Bedingungen stattfindet. Spätestens wird der zusätzliche Sensor also mit Eintritt in die Phase 2 aktiviert und nimmt Entfernungs- und gegebenenfalls Dopplerdaten auf. Dieser, im Wesentlichen als staubdurchdringender Sensor konzipierte zusätzliche Sensor ist z.B. ein scannendes Radar im Millimeterwellenbereich mit guter Auflösung in horizontaler Richtung (z.B. 1° bis 3° Strahldivergenz) und aufgeweitetem Strahl in vertikaler Richtung (z.B. 15° bis zu 50°).

Fig. 2 zeigt schematisch das Sichtfeld des zusätzlichen Sensors im Schnitt und ein mögliches Gefahrenszenario. Es ist dabei, wie in Fig. 2 gezeigt, nicht zwingend notwendig, dass der Bereich U direkt unterhalb des Hubschraubers H durch den zusätzlichen Sensor S überwacht wird. Der Grund hierfür liegt in der Tatsache begründet, dass der Pilot stets beim Endanflug vor Eintritt in die Phase 2 visuell überprüft, ob die Landezone frei von Hindernissen und Gefahren ist. Hierfür wird ein Bereich B im Bereich vor und hinter und jeweils unter dem Hubschrauber H überwacht. Sollte der Bereich B nicht frei von Gefahren O sein, wird die Landung durch ein sog. "Go-around-Manöver" unmittelbar abgebrochen. Wenn also in Phase 2 oder 3 eine Gefährdung O in die Staubwolke W eintritt, so nähert sie sich dem landenden Hubschrauber H vom Rand der Landezone L, wie in Fig. 2 dargestellt.

Ebenso wird für das beschriebene Verfahren der vorliegenden Erfindung für den zusätzlichen Radarsensor S kein in zwei Dimensionen abbildender Sensor benötigt. Die Art der plötzlich eintretenden Gefährdung (Lkw, Pkw, Mensch, rollendes Kerosinfass etc.) ist für den Piloten innerhalb der Brown-Out-Wolke ebenso unerheblich, wie die präzise Richtung aus der sich die Gefährdung O dem Hubschrauber H nähert. Aus diesem Grund erfolgt die Warnung im Rahmen der synthetischen Sicht vorteilhaft anhand eines einfachen, flächenhaften oder linienartigen Symbols in Richtung der Bedrohung (z.B. mittels Einfärbung eines Sektors oder eines Quadranten in Relation zur Hubschrauberlängsachse). Zur Reduktion der Arbeitsbelastung für den Piloten kann der laterale Abstand der Bedrohung zum Hubschrauber vorteilhaft durch eine veränderliche (zwei- oder mehrstufige) Blinkgeschwindigkeit des entsprechenden Warnsymbols veranschaulicht werden.

Ein System auf welchem das erfindungsgemäße Verfahren ablaufen kann, besteht neben dem Sensor zur Aufnahme der 3D-Daten (nicht dargestellt), einer Navigationsanlage (nicht dargestellt) und dem zusätzlichern Sensor S noch aus einer Prozessoreinheit, die die jeweiligen Daten dieser Systeme verarbeitet.

Ein Problem bei der vollautomatischen Auswertung der Daten ist, dass die Radardaten signifikante Rückstreusignale vom Boden der Landezone sowie von kleinen Objekten enthalten, die den Hubschrauber bei der Landung nicht gefährden; deren Anzeige jedoch die Arbeitsbelastung des Piloten unnötig erhöhen würden.

Um eine möglichst geringe Zahl von entsprechenden Falschalarmen zu erhalten, werden die Daten aufeinanderfolgender Scans des zusätzlichen Sensors mit Hilfe der Navigationsanlage, wie sie bereits für die synthetische Sicht im Dokument DE10 2004 051 625 B4 beschriebenen ist, entsprechend der Ortsänderung des Hubschraubers lage- und positionsgenau korrigiert. Dadurch werden Effekte durch die Eigenbewegung des Hubschraubers kompensiert.

Aus den Radardaten des zusätzlichen Sensors können Objekte extrahiert werden, die sich in die Landezone hinein oder innerhalb der Landezone fort bewegen. Die Prozessoreinheit erzeugt daraus eine Warnung an den Piloten. Zusätzlich kann die Dopplerinformation des Radars zur Identifizierung von sich bewegenden Objekten verwendet werden. Dazu müssen die Dopplersignale, die durch die Eigenbewegung des Hubschraubers erzeugt werden, mit Hilfe der Navigationsdaten innerhalb der Prozessoreinheit herausgerechnet werden.

Zur weiteren Unterdrückung von Falschalarmen durch Bodenreflexe werden die für die synthetische Sicht erzeugten 3D-Daten ebenfalls prozessiert und klassifiziert, um so eine hochaufgelöste Hindernis-, bzw. Objektkarte der Landezone zu bekommen. Objekte in dieser Karte können jetzt mit den in der Regel grob und schlecht aufgelösten Echos des zusätzlichen Sensors korreliert werden. Dazu werden anhand der Objektkarte synthetische Radarechos von diesen bekannten und zur Darstellung gebrachten Objekten berechnet. Dieses Ergebnis wird mit den tatsächlichen Daten des Radars verglichen, um so die Effizienz und Zuverlässigkeit bei der Unterdrückung von Fehlalarmen weiter zu erhöhen. Diese Kombination der 3D-Informationen aus den Daten des Sensors zur Aufnahme der 3D-Daten und den Daten des zusätzlichen Radarsensors erlaubt es, eine sehr hohe Warnzuverlässigkeit mit einem relativ einfachen zusätzlichen Sensor (nur in einer Richtung scannend) zu erhalten.

Es kann auch von Vorteil sein, für jedes signifikante Echo des Radars innerhalb der Landezone zu überprüfen, ob man hierfür ein Objekt in den hochauflösenden 3D-Daten des 3D-Sensors findet. Das bedeutet, dass man das obige Verfahren, wenn es von Vorteil ist, umkehrt.

## Patentansprüche

1. Verfahren zur Erzeugung einer sensorgestützten, synthetischen Sicht zur Landeunterstützung von Helikoptern (H) unter Brown-Out oder White-Out-Bedingungen, wobei aus während des Landeanflugs aufgenommenen 3D-Daten der vorgesehenen Landezone (L) fortlaufend eine virtuelle 3D-Repräsentation der Landezone (L) erstellt wird und wobei eine Kontrollroutine vorhanden ist zur Sicherstellung, dass bei der Repräsentation keine 3D-Daten berücksichtigt werden, welche unter Brown-Out oder White-Out-Bedingungen erzeugt wurden, und wobei ein zusätzlicher Radarsensor (S) aktiviert wird zur fortlaufenden Erzeugung von Entfernungs- und/oder Dopplerdaten von potentiellen in die Landezone (L) eindringenden Objekten (O),
**dadurch gekennzeichnet, dass**
der zusätzliche Radarsensor (S) aktiviert wird, sobald die Kontrollroutine die Aufnahme von 3D-Daten unter Brown-Out oder White-Out-Bedingungen feststellt, und die von dem zusätzlichen Radarsensor (S) fortlaufend erzeugten Entfernungs- und/oder Dopplerdaten einem Piloten des landenden Helikopters (H) in der synthetischen Sicht angezeigt werden und zur Vermeidung von Fehlalarmen eine Prozessierung und Klassifizierung der 3D-Daten durchgeführt wird zur Identifizierung von Objekten in der Landezone (L) und dass anhand der gefundenen Objekte synthetische Radardaten erzeugt werden, welche mit den gemessenen Radardaten korreliert werden.

2. Verfahren nach Anspruch 1,
**dadurch gekennzeichnet, dass**
die von dem Radarsensor (S) erzeugten Daten mit Hilfe der Positions- und Lagedaten des Helikopters (H) korrigiert werden.

3. Verfahren gemäß einem der vorangehenden Ansprüche,
**dadurch gekennzeichnet, dass**
zur Erzeugung der Entfernungs- und/oder Dopplerdaten ein scannendes Radar im Millimeterwellenbereich mit einer Strahldivergenz von 1-3° in horizontaler Richtung und 15-50° in vertikaler Richtung eingesetzt wird.

4. Verfahren gemäß einem der vorangehenden Ansprüche,
**dadurch gekennzeichnet, dass**
der Radarsensor (S) ein elektronisch scannendes Radar darstellt.

5. Verfahren gemäß einem der vorangehenden Ansprüche,
**dadurch gekennzeichnet, dass**
ein von dem Radarsensor (S) detektiertes Objekt (O) dem Piloten in der synthetischen Sicht als flächenhaftes oder linienartiges Symbol dargestellt wird.

6. Verfahren gemäß einem der vorangehenden Ansprüche,
**dadurch gekennzeichnet, dass**
ein von dem Radarsensor (S) detektiertes Objekt (O) dem Piloten in der synthetischen Sicht mittel Einfärbung eines Sektors oder eines Quadranten in Relation zur Hubschrauberlängsachse angezeigt wird.

## Claims

1. Method for producing a sensor-supported, synthetic view for landing support of helicopters (H) under brown-out or white-out conditions, wherein a virtual 3-D representation of the landing zone (L) is continuously created from 3-D data of the intended landing zone (L) recorded during the landing approach and wherein a monitoring routine is available to ensure that no 3-D data that was produced under brown-out or white-out conditions is considered in the representation, and wherein an additional radar sensor (S) is activated to continuously produce distance and/or Doppler data of potential objects (O) entering the landing zone (L),
**characterized in that**
the additional radar sensor (S) is activated as soon as the monitoring routine detects that 3-D data has been recorded under brown-out or white-out conditions, and the distance and/or Doppler data continuously produced by the additional radar sensor (S) are displayed to a pilot of the landing helicopter (H) in the synthetic view and, in order to avoid false alarms, the 3-D data is processed and classified to identify objects in the landing zone (L), and **in that** synthetic radar data which is correlated with the measured radar data is produced on the basis of the objects found.

2. Method according to Claim 1,
**characterized in that**
the data produced by the radar sensor (S) is corrected with the aid of position and attitude data of the helicopter (H).

3. Method according to any one of the preceding claims,
**characterized in that**,
to produce the distance and/or Doppler data, a scanning radar in the millimetric wave range is used, with a beam divergence of 1-3° in the horizontal direction and 15-50° in the vertical direction.

4. Method according to any one of the preceding claims, **characterized in that**
the radar sensor (S) is an electronically scanning radar.

5. Method according to any one of the preceding claims, **characterized in that**
an object (O) detected by the radar sensor (S) is displayed to the pilot in the synthetic view as a two-dimensional or linear symbol.

6. Method according to any one of the preceding claims, **characterized in that**
an object (O) detected by the radar sensor (S) is displayed to the pilot in the synthetic view by coloring a sector or a quadrant in relation to the longitudinal axis of the helicopter.

## Revendications

1. Procédé pour générer une vue synthétisée assistée par des capteurs pour l'assistance à l'atterrissage d'hélicoptères (H) dans des conditions d'éclairage réduit ou de voile blanc, une représentation 3D virtuelle de la zone d'atterrissage (L) étant créée continuellement à partir de données 3D de la zone d'atterrissage (L) prévue enregistrées pendant l'approche d'atterrissage et une routine de contrôle étant présente afin de garantir que lors de la représentation, aucune donnée 3D qui a été générée dans des conditions d'éclairage réduit ou de voile blanc n'est prise en compte, et un capteur radar (S) supplémentaire étant activé pour la génération continue de données de distance et/ou Doppler d'objets (O) qui pénètrent potentiellement dans la zone d'atterrissage (L),
**caractérisé en ce que**
le capteur radar (S) supplémentaire est activé dès que la routine de contrôle constate l'enregistrement de données 3D dans des conditions d'éclairage réduit ou de voile blanc et les données de distance et/ou Doppler générées en continu par le capteur radar (S) supplémentaire sont affichées dans la vue synthétisée à l'attention d'un pilote de l'hélicoptère (H) en cours d'atterrissage et, en vue d'éviter des alarmes intempestives, un traitement et une classification des données 3D sont effectués en vue d'identifier des objets dans la zone d'atterrissage (L) et **en ce que** des données radar de synthèse sont générées à l'aide des objets trouvés, lesquelles sont corrélées avec les données radar mesurées.

2. Procédé selon la revendication 1, **caractérisé en ce que** les données générées par le capteur radar (S) sont corrigées à l'aide des données de position et d'attitude de l'hélicoptère (H).

3. Procédé selon l'une des revendications précédentes, **caractérisé en ce qu'**un radar de balayage fonctionnant dans la plage des ondes millimétriques ayant une divergence de faisceau de 1-3° dans le sens horizontal et de 15-50° dans le sens vertical est utilisé pour la génération des données de distance et/ou Doppler.

4. Procédé selon l'une des revendications précédentes, **caractérisé en ce que** le capteur radar (S) représente un radar à balayage électronique.

5. Procédé selon l'une des revendications précédentes, **caractérisé en ce qu'**un objet (O) détecté par le capteur radar (S) est représenté au pilote dans la vue synthétisée sous la forme d'un symbole en surface ou de type ligne.

6. Procédé selon l'une des revendications précédentes, **caractérisé en ce qu'**un objet (O) détecté par le capteur radar (S) est représenté au pilote dans la vue synthétisée au moyen de la coloration d'un secteur ou d'un cadran en relation avec l'axe longitudinal de l'hélicoptère.
